# EUROPEAN PATENT SPECIFICATION

(11) **EP 1 555 473 B1**
(45) Date of publication and mention of the grant of the patent: **23.08.2006**
(21) Application number: 04425894.5
(22) Date of filing: 26.11.2004
(51) Int. Cl.: F16L 13/14, F16J 15/00

(54) **O-ring for press-fittings**
O-Ring für Pressverbindungen
Joint torique pour raccords à sertir

(30) Priority: 16.01.2004 IT MI20040053
(43) Date of publication of application: 20.07.2005
(73) Proprietor: Raccorderie Metalliche S.p.A., 46010 Campitello di Marcaria, Mantova (IT)
(72) Inventor: Schneider, Norbert, 46030 S. Cataldo di Borgoforte MN (IT)
(74) Representative: Concone, Emanuele

(56) References cited:
- EP-A- 1 260 741
- DE-U1- 29 813 935
- US-B1- 6 260 891

## Description

The present invention relates to an O-ring for press-fittings having a cross section modified in at least one point.

It is known that press-fittings are conventionally used in connecting tubes to each other permanently. For this purpose it is not only necessary that the tubes to be connected are firmly attached together through the press-fitting, but also that the tightness is ensured, so that there are no leaks of the fluids conveyed through the connected tubes. Therefore, it is common practice that a gasket (O-ring) is always provided at the ends of the press-fitting used as openings for inserting the tubes to be connected. For this purpose, known press-fittings are usually provided with a round bulge, having a hook-shaped profile, whose inner space forms a housing for said O-ring.

EP 0 870 964 in the name of the same applicant discloses a press-fitting in which said bulge has the profile of a substantially isosceles triangle instead of that of a hook. This substantially isosceles profile of the bulge confers numerous advantages to the press-fitting, the main of which consists in the possibility of reducing the pressing space with respect to the fittings according to the prior art, and to use simplified pressing means.

The O-ring inserted into the housing is, according to the prior art, of the type having circular cross section, and is preferably made of an elastic material, for example India rubber. During the pressing of the fitting, said bulge is squashed and its profile takes on a substantially trapezoidal shape. Also the O-ring is deformed in a corresponding way, being squashed between the inner walls of the housing and the outer wall of the tube inserted in the press-fitting. In this way, the O-ring tends to occupy most of the inner space of the housing, so that if the press-fitting has no faults or imperfections, the fitting is water-tight.

However, in some cases the junctions carried out by using an O-ring with circular cross section in a press-fitting of the above mentioned type do not assure a suitable tightness, and leaks of the fluids conveyed through the tubes connected by the press-fitting could occur. In particular, these leaks may occur if the housing inner surface or the outer surface of the tube inserted in the fitting are not completely smooth, but have imperfections or faults.

On the other hand, all previous attempts made to improve the tightness of the press-fitting have brought no results, because when modifying the size of the O-ring it is easy to incur a further drawback, namely the risk to pinch the O-ring during the pressing step of the fitting.

EP 1 260 741 in the name of the same applicant discloses an O-ring which, inserted into the housing of a press-fitting, is capable of ensuring a perfect tightness even in the presence of imperfections or faults of the surface of the press-fitting itself or of the tube inserted therein. Thanks to its peculiar shape, said O-ring has a cross section of larger area with respect to that of the O-rings of conventional type that can be inserted in the same housing of a press-fitting. Therefore, it fills said housing almost completely, and though not causing any problems during the pressing of the fitting, it has a higher compression factor with respect to conventional O-rings, with consequent improvement of the tightness and duration of the junction over time. However, this type of known gasket is not free from drawbacks.

Typically, said junctions are water-tight after pressing by an operator. When said operator forgets to perform said pressing, pressure drops in the plant should be observed in the subsequent tightness tests. However, it is possible that the tolerances between the O-ring and the connecting tube are such as to make undetectable during the tests a leak that, although very small, is present anyway. As it can be easily understood, said missed detection causes over time significant leaks of the fluids conveyed through the plant.

DE-U-29813935 discloses an O-ring according to the preamble of claim 1. This O-ring in at least one point has a continuously radiused recess with respect to the inner profile of the O-ring, as well as, at said recess, an increased height with respect to the outer profile thereof. Such a simple design, however, does not guarantee the passage of fluid, and therefore the detection of the leak, in case of unfavourable tolerances.

Therefore the object of the present invention is to provide an O-ring suitable to detect possible leaks caused by lack of pressing, already during the tightness tests, while assuring a perfect tightness of the press-fitting. This object is achieved by means of an O-ring whose characteristics are disclosed in the first claim and other advantageous features are disclosed in the dependent claims.

Thanks to its peculiar shape, the O-ring according to the present invention retains the advantages of the above-mentioned previous O-ring as far as the cross section of larger area that fills the housing almost completely, with consequent improvement of the tightness and duration of the junction over time, is concerned. In particular, the O-ring for press-fittings according to the present invention is modified in at least one point to meet the requirement by which the non-pressed fitting is detected as "leaking fitting" already during the tightness tests carried out by an installer. In fact, it allows to compensate for the variations of the tolerances between the O-ring and the connecting tube, thus providing a greater sensitivity in leak detection.

Further advantages and preferred features of the O-ring according to the present invention will become evident to those skilled in the art from the following detailed description of an embodiment thereof with reference to the accompanying drawings, wherein:
- figure 1 shows a front view of an O-ring according to a preferred embodiment of the invention;
- figure 2 shows a cross sectional view taken along line P-P' of the O-ring of fig.1;
- figure 3 shows a cross sectional view taken along line R-R' of the O-ring of fig.1;
- figure 4 shows an enlarged detail of the O-ring of fig.1;
- figure 5 shows an enlarged view of the cross section taken along line R-R' of the O-ring of fig.1.

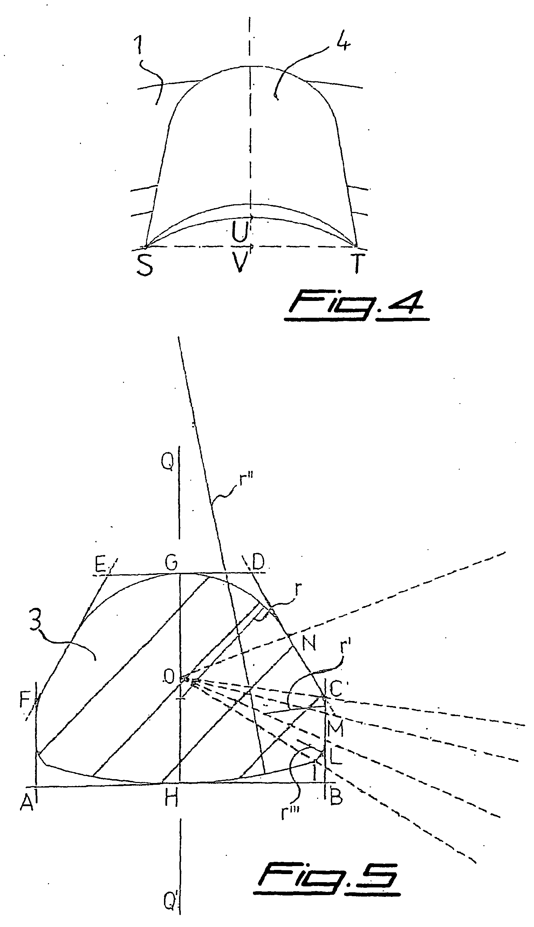

With reference to fig.2, the O-ring 1 has a cross section 2, obtained from the intersection of said O-ring with a plane, for example plane P-P', that has the shape of a substantially isosceles trapezoid with convex bases according to the previous patent EP 1 260 741 in the name of the same applicant.

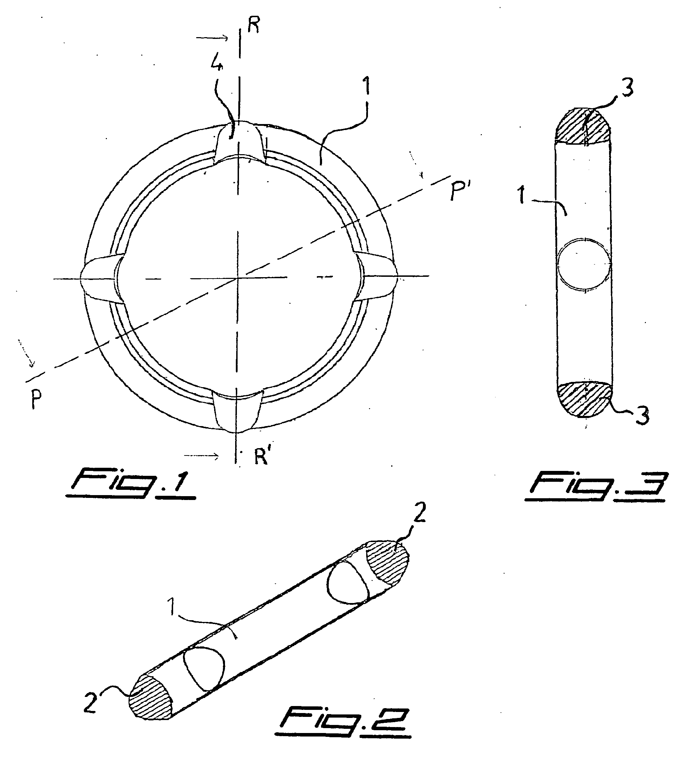

According to the invention, the O-ring 1 has at least one point, and with particular reference to figs. 1, 3 and 4 at least one portion 4, whose cross section is modified in a discontinuous manner with respect to the cross section of the rest of O-ring 1. As clearly evident in fig.1, in a preferred embodiment there are four portions 4 arranged 90° apart. From the intersection of O-ring 1 with plane R-R' there is obtained the cross sectional view illustrated in fig.3, that shows the modified cross section 3 at the central point of portions 4. Said modified cross section 3 is illustrated and enlarged in fig.5. It has a shape that can substantially be obtained from an irregular hexagon, having a plane of symmetry Q-Q' and in which the two opposite sides intersected by said plane of symmetry are replaced by two arcs of circumference, one of which has a radius at least triple with respect to the other, as better illustrated hereafter.

Therefore, in at least one point O-ring 1 has a cross section 3 of the same area as the rest of the gasket, yet modified in shape. In this way, said O-ring 1 allows to detect possible leaks caused by lack of pressing, already during the tightness tests, since exactly at that point, or even better in that portion 4, the gasket has a recess in its inner profile, clearly evident in fig.4. At the same time, however, the gasket can guarantee a perfect tightness of the press-fitting, since said recess is compensated on the opposite side by an increased height with respect to the outer profile of the gasket, so as to keep constant, as mentioned above, the area of the cross section of the latter at any point.

According to a preferred embodiment of the invention, shown in figure 5, the modified cross section 3 of O-ring 1 has a shape that can be obtained from an irregular hexagonal polygon ABCDEF having a plane of symmetry Q-Q'. Considering the presence of said plane of symmetry Q-Q', only the right half of the modified cross section 3 of O-ring 1 is defined, the other half being a mirror image of the former. In particular, there are defined:
- an arc GN of a circumference (centered in a point belonging to said plane of symmetry Q-Q') of radius r between 0,50 and 0,60 times the distance GH, preferably equal to 0,53 times GH, where G is the tangent point of arc GN to side ED of the hexagon and H is the intersection point of said plane of symmetry Q-Q' with side AB of the hexagon;
- segments NC and ML are two straight lengths that can be defined as portions of two adjacent sides of the hexagon DC and CB, respectively. Said two segments NC and ML are radiused by an arc CM of a circumference of radius r' preferably such that r'>2r"', where r"' is the radius of an arc of circumference LI, as defined hereunder;
- an arc IH of a circumference (centered in a point belonging to said plane of symmetry Q-Q') having a radius r" such that 4r>r">3r, where H is the tangent point of arc IH to side AB of the hexagon, arc IH being radiused to segment ML by an arc LI of a circumference of radius r'" preferably such that r"'<r.

According to a preferred embodiment of the invention:
- radius r ranges from 1,40 to 1,50 mm, and it is preferably 1,45 mm;
- radius r" ranges from 5,11 to 5,13 mm, and it is preferably 5,12 mm;
- radius r"' ranges from 0,30 to 0,60 mm, and it is preferably 0,60 mm.

According to a more preferred embodiment of the invention, the opposite sides AF and BC of the irregular hexagon ABCDEF are parallel.

Referring now to fig.4, the distance UV of the recess from the inner profile of the gasket, in a preferred embodiment, is 0,30 mm or more.

In a more preferred embodiment, the length ST of portion 4 is preferably equal to the width of segment AB of the irregular hexagon of fig.5. In this way, when seen from below, said portion 4 takes the shape of a circle, as seen in fig.3. In the same figure it is possible to see that the width of O-ring 1 does not change in the regions of the suitably modified portions 4, as on the contrary occurs in prior art gaskets. This feature is very important in that it cooperates, together with the fact that also the cross sectional areas do not change, in assuring the greatest tightness even in the presence of cross sections of the gasket locally modified in shape.

Once inserted in the housing of a press-fitting, the O-ring having cross section 3 modified according to the preferred embodiment of the invention fills it almost completely. In fact, the area of its section is larger that that of the O-ring according to EP 1 260 741, which is in turn 20% larger than that of an O-ring having a circular section which could have been inserted into the same housing. Therefore, the press-fitting provided with the O-ring according to this embodiment of the invention allows, as mentioned above, to detect possible leaks caused by lack of pressing already during the tightness tests, thanks to the presence of said recess, while assuring the greatest tightness.

It is clear that the above-described and illustrated embodiment of the O-ring according to the invention is just an example susceptible of various modifications within the scope of the claims. In particular, by keeping the proportions among the above-described dimensions, it is possible to manufacture O-rings with larger or smaller cross sections.

Furthermore, in manufacturing the O-ring according to the present invention it is possible to use any known material considered suitable to manufacture O-rings of conventional type, for example India rubber in different mixtures.

## Claims

1. O-ring (1) having a cross section that in at least one point has a recess with respect to the inner profile of the O-ring as well as, at said recess, an increased height with respect to the outer profile thereof, **characterized in that** the cross section of the O-ring (1) is trapezoidal, **in that** the cross section (3) of the O-ring (1) at said said recess substantially has the shape of an irregular hexagon having a plane of symmetry (Q-Q') and in which the two opposite sides intersected by said plane of symmetry (Q-Q') are replaced by two arcs of circumference one of which has a radius at least triple with respect to the other.

2. O-ring (1) according to claim 1, **characterized in that** the width of the trapezoidal cross section (2) of the O-ring (1) is equal to the width of the cross section (3) at said recess.

3. O-ring (1) according to claim 2, **characterized in that** said cross section (3) at the recess substantially has the shape of an irregular hexagon with two opposite parallel sides.

4. O-ring (1) according to one or more of the preceding claims, **characterized in that** half of the cross section (3) thereof at the recess is a geometric figure enclosed by a first segment (GH) of the line of intersection of the plane of symmetry (Q-Q') with the plane of the cross section (3), a first arc (GN) of a circumference of radius r, centered in a point belonging to said line of intersection, where r is smaller than said segment (GH), a second segment (NC) and a third segment (ML) of adjacent sides of the irregular hexagon and a second arc (IH) of a circumference of radius r", centered on said line of intersection, where r" is greater than or equal to 3r, said second segment (NC) and third segment (ML) being radiused by a third arc (CM) of a circumference of radius r', and said third segment (ML) and said second arc (IH) being radiused by a fourth arc (LI) of a circumference of radius r"', where r'" is smaller than r and r' is greater than 2r"'.

5. O-ring (1) according to the preceding claim, **characterized in that** said radius r is between 0,50 and 0,60 times said first segment (GH), being preferably equal to 0,53 times said first segment (GH).

6. O-ring (1) according to claims 4 or 5, **characterized in that** said radius r" is smaller than 4r.

7. O-ring (1) according to one or more of the preceding claims, **characterized in that** said recess is present in four separate points of said O-ring (1), arranged 90° apart.

8. O-ring (1) according to one or more of claims 2 to 7, **characterized in that** the width of the trapezoidal cross section (2) of the O-ring (1) is equal to the length (ST) of said recess.

9. O-ring (1) according to one or more of the preceding claims, **characterized in that** the area of the cross section thereof is constant at any point.

10. O-ring (1) according to one or more of the preceding claims, **characterized in that** it is made of India rubber.

## Patentansprüche

1. O-Ring (1) mit einem Querschnitt, welcher an wenigstens einer Stelle eine Aussparung in Bezug auf das innere Profil des O-Rings hat, sowie an der Aussparung eine vergrößerte Höhe hinsichtlich des äußeren Profils hiervon aufweist, **dadurch gekennzeichnet, dass** der Querschnitt des O-Rings (1) trapezoidal ist, dass der Querschnitt (3) des O-Rings (1) an der Aussparung im Wesentlichen die Gestalt eines unregelmäßigen Sechsecks mit einer Symmetrieebene (Q-Q') aufweist und wobei die beiden gegenüberliegenden, durch die Symmetrieebene (Q-Q') unterteilten Seiten durch zwei Umkreisbögen ersetzt sind, von denen einer einen Radius aufweist, der das dreifache gegenüber dem anderen ist.

2. O-Ring (1) nach Anspruch 1, **dadurch gekennzeichnet, dass** die Breite des trapezoidalen Querschnitts (2) des O-Rings (1) gleich der Breite des Querschnitts (3) an der Aussparung ist.

3. O-Ring (1) nach Anspruch 2, **dadurch gekennzeichnet, dass** der Querschnitt (3) an der Aussparung im Wesentlichen die Gestalt eines unregelmäßigen Sechsecks mit zwei gegenüberliegenden parallelen Seiten aufweist.

4. O-Ring (1) nach einem oder mehreren der vorangegangenen Ansprüche, **dadurch gekennzeichnet, dass** die Hälfte von dessen Querschnitt (3) an der Aussparung eine geometrische Figur ist, welche umschlossen ist durch ein erstes Segment (GH) der Trennlinie der Symmetrieebene (Q-Q') zur Ebene des Querschnitts (3), einen ersten Bogen (GN) eines Umkreises mit Radius r, welcher in einem Punkt zentriert ist, der zur Trennlinie gehört, wobei r geringer als das Segment (GH) ist, ein zweites Segment (NC) und ein drittes Segment (ML) an benachbarten Seiten des unregelmäßigen Sechsecks und einen zweiten Bogen (IH) eines Umkreises mit Radius r", welcher an der Trennlinie zentriert ist, wobei r" größer als oder gleich 3r ist, wobei das zweite Segment (NC) und das dritte Segment (ML) radial durch einen dritten Bogen (CM) eines Umkreises mit Radius r' verbunden sind, wobei das dritte Segment (ML) und der zweite Bogen (IH) radial durch einen vierten Bogen (LI) eines Umkreises mit Radius r''' verbunden sind, wobei r''' geringer als r ist und wobei r' größer als 2r''' ist.

5. O-Ring (1) nach dem vorangegangenen Anspruch, **dadurch gekennzeichnet, dass** der Radius r zwischen dem 0,50 und 0,60 fachen des ersten Segments (GH) ist, wobei er vorzugsweise gleich dem 0,53 fachen des ersten Segments (GH) ist.

6. O-Ring (1) nach Anspruch 4 oder 5, **dadurch gekennzeichnet, dass** der Radius r" geringer als 4r ist.

7. O-Ring (1) nach einem oder mehreren der vorangegangenen Ansprüche, **dadurch gekennzeichnet, dass** die Aussparung an vier separaten Stellen am O-Ring (1) vorliegt, welche 90° zueinander beabstandet angeordnet sind.

8. O-Ring (1) nach einem oder mehreren der Ansprüche 2 bis 7, **dadurch gekennzeichnet, dass** die Breite des trapeziodalen Querschnitts (2) des O-Rings (1) gleich der Länge (ST) der Aussparung ist.

9. O-Ring (1) nach einem oder mehreren der vorangegangenen Ansprüche, **dadurch gekennzeichnet, dass** die Fläche von dessen Querschnitt an jedem Punkt konstant ist.

10. O-Ring (1) nach einem oder mehreren der vorangegangenen Ansprüche, **dadurch gekennzeichnet, dass** er aus Gummi hergestellt ist.

## Revendications

1. Joint torique (1) ayant une coupe transversale qui, en au moins un point, a un évidement par rapport au profil intérieur du joint torique ainsi qu'au niveau dudit évidement, qu'une hauteur accrue par rapport à son profil extérieur, **caractérisé en ce que** la coupe transversale du joint torique (1) est trapézoïdale, **en ce que** la coupe transversale (3) du joint torique (1) au niveau dudit évidement a sensiblement la forme d'un hexagone irrégulier un plan de symétrie (Q-Q'), et dans lequel les deux côtés opposés recoupés par ledit plan de symétrie (Q-Q') sont remplacés par deux arcs de circonférence, dont un premier a un rayon qui est au moins le triple par rapport à l'autre.

2. Joint torique (1) selon la revendication 1, **caractérisé en ce que** la largeur de la coupe transversale trapézoïdale (2) du joint torique (1) est égale à la largeur de la coupe transversale (3) au niveau dudit évidement.

3. Joint torique (1) selon la revendication 2, **caractérisé en ce que** ladite coupe transversale (3) au niveau de l'évidement a sensiblement la forme d'un hexagone irrégulier avec deux côtés parallèles opposés.

4. Joint torique (1) selon l'une quelconque des revendications précédentes, **caractérisé en ce qu'**une moitié de sa coupe transversale (3), au niveau de l'évidement, est une figure géométrique renfermée par un premier segment (GH) de la ligne d'intersection du plan de symétrie (Q-Q') avec le plan de la coupe transversale (3), un premier arc (GN) d'une circonférence de rayon r, centré dans un point appartenant à ladite ligne d'intersection, où r est plus petit que ledit segment (GH), un deuxième segment (NC) et un troisième segment (ML) de côtés adjacents de l'hexagone irrégulier, et un deuxième arc (IH) d'une circonférence de rayon r", centré sur ladite ligne d'intersection, où r" est supérieur ou égal à 3r, ledit deuxième segment (NC) et ledit troisième segment (ML) étant dotés d'un rayon par un troisième arc (CM) d'une circonférence de rayon r', et ledit troisième segment (ML) et ledit deuxième arc (IH) étant dotés d'un rayon par un quatrième arc (LI) d'une circonférence de rayon r''', où r''' est plus petit que r, et r' est plus grand que 2r'''.

5. Joint torique (1) selon la revendication précédente, **caractérisé en ce que** ledit rayon r est entre 0,5 et 0,6 fois ledit premier segment (GH), étant de préférence égal à 0,53 fois ledit premier segment (GH).

6. Joint torique (1) selon la revendication 4 ou 5, **caractérisé en ce que** ledit rayon r" est inférieur à 4r.

7. Joint torique (1) selon l'une quelconque des revendications précédentes, **caractérisé en ce que** ledit évidement est présent dans quatre points séparés dudit joint torique (1), agencés séparés de 90°.

8. Joint torique (1) selon l'une quelconque des revendications 2 à 7, **caractérisé en ce que** la largeur de la coupe transversale trapézoïdale (2) du joint torique (1) est égale à la longueur (ST) dudit évidement.

9. Joint torique (1) selon l'une quelconque des revendications précédentes, **caractérisé en ce que** l'aire de sa coupe transversale est constante en un point quelconque.

10. Joint torique (1) selon l'une quelconque des revendications précédentes, **caractérisé en ce qu'**il est réalisé en caoutchouc India.
